# EUROPÄISCHE PATENTSCHRIFT

(11) **EP 3 817 946 B1**
(45) Veröffentlichungstag und Bekanntmachung des Hinweises auf die Patenterteilung: **19.10.2022**
(21) Anmeldenummer: 19736653.7
(22) Anmeldetag: 02.07.2019
(51) Int. Cl.: B60L 53/00, B60L 1/00

(54) **VERFAHREN ZUM BETRIEB EINES ELEKTRISCHEN FAHRZEUGS**
METHOD FOR OPERATING AN ELECTRIC VEHICLE
PROCÉDÉ DE FONCTIONNEMENT D'UN VÉHICULE ÉLECTRIQUE

(30) Priorität: 02.07.2018 DE 102018005252
(43) Veröffentlichungstag der Anmeldung: 12.05.2021
(73) Patentinhaber: Mercedes-Benz Group AG, 70372 Stuttgart (DE)
(72) Erfinder: SCHÖNHERR, Gudrun, 71088 Holzgerlingen (DE)
(74) Vertreter: JENSEN & SON
(86) Internationale Anmeldenummer: PCT/EP2019/067695
(87) Internationale Veröffentlichungsnummer: WO 2020/007837

(56) Entgegenhaltungen:
- JP-A- 2004 096 973
- KR-A- 20110 004 293
- KR-A- 20140 054 474
- KR-A- 20150 117 089
- KR-A- 20180 100 973
- KR-A- 20180 100 986
- US-A1- 2014 258 457

## Beschreibung

Die Erfindung betrifft ein Verfahren zum Betrieb eines Fahrzeugs nach den Merkmalen des Oberbegriffs des Anspruchs 1.

Aus dem Stand der Technik ist, wie in der DE 10 2017 000 882 A1 beschrieben, ein Verfahren zum Betrieb eines Fahrzeugs bekannt. In diesem Verfahren wird eine aktive Zielführung des Fahrzeuges durchgeführt, bei welcher ein Navigationsziel vorgegeben wird und eine Zeitdauer bis zum Erreichen eines Navigationszieles fortlaufend ermittelt wird. In Abhängigkeit des vorgegebenen Navigationszieles wird eine Auswahl von Komfortfunktionen des Fahrzeuges automatisch aktiviert oder einem Fahrer zur manuellen Aktivierung angeboten.

Darüber hinaus ist aus der US 2014/0258457 A1 ein Verfahren bekannt, einem Nutzer eines elektrischen Fahrzeugs Multimedia- oder andere Inhalte zur Verfügung zu stellen, während sein Fahrzeug geladen wird.

In der KR 2011 0004293 A werden einem Nutzer eines Elektrofahrzeugs während des Ladevorgangs personalisierte Zusatzdienste wie Filme, Musik oder Navigationsupdates zur Verfügung gestellt.

Die JP 2004 096973 A zeigt ferner ein Verfahren, bei dem für einen Benutzer während des Laden seines Elektrofahrzeugs verschiedene Daten für die Navigation des Fahrzeugs (wie z.B. Kartendaten) heruntergeladen und auf der Navigationseinrichtung des Fahrzeugs aktualisiert werden.

Der Erfindung liegt die Aufgabe zu Grunde, ein gegenüber dem Stand der Technik verbessertes Verfahren zum Betrieb eines Fahrzeugs anzugeben.

Die Aufgabe wird erfindungsgemäß gelöst durch ein Verfahren zum Betrieb eines Fahrzeugs mit den Merkmalen des Anspruchs 1.

Vorteilhafte Ausgestaltungen der Erfindung sind Gegenstand der Unteransprüche.

In einem Verfahren zum Betrieb eines Fahrzeugs wird mindestens einem Fahrzeugnutzer, beispielsweise einem Fahrzeugführer und/oder einem anderen Fahrzeuginsassen, mindestens eine Komfortfunktion zur Aktivierung angeboten. Erfindungsgemäß wird die mindestens eine Komfortfunktion dem mindestens einen Fahrzeugnutzer nach einem Start eines elektrischen Ladevorgangs mindestens eines Energiespeichers des Fahrzeugs zur Aktivierung angeboten, wobei dieser elektrische Ladevorgang mittels einer fahrzeugexternen elektrischen Energiequelle erfolgt, d. h. insbesondere an einer elektrischen Ladestation, zum Beispiel an einer öffentlich zugänglichen oder privaten Ladestation. Dabei wird die mindestens eine Komfortfunktion dem Fahrzeugnutzer in Abhängigkeit von einer voraussichtlich erforderlichen Ladezeit (ELZ) angeboten.

D. h. das Fahrzeug ist insbesondere als ein Elektrofahrzeug, Hybridfahrzeug oder Brennstoffzellenfahrzeug ausgebildet. Der mindestens eine Energiespeicher, welcher insbesondere als ein elektrochemischer Energiespeicher ausgebildet ist, dient somit insbesondere einer Speicherung von Energie zum Antrieb des Fahrzeugs, d. h. der mindestens eine Energiespeicher ist insbesondere als eine so genannte Traktionsbatterie des Fahrzeugs ausgebildet.

Mittels des erfindungsgemäßen Verfahrens kann eine Ladezeit, in welcher der mindestens eine Energiespeicher des Fahrzeugs geladen wird und das Fahrzeug somit nicht zur Fortbewegung genutzt werden kann, sondern im Stillstand ist, auf sinnvolle Weise genutzt werden, insbesondere zur geistigen und/oder körperlichen Erholung, Vitalisierung, Entspannung und/oder Erfrischung des mindestens einen Fahrzeugnutzers, insbesondere für einen nachfolgenden Fahrtabschnitt, und/oder zur Verbesserung seiner Gesundheit.

Beispielsweise wird die mindestens eine Komfortfunktion dem mindestens einen Fahrzeugnutzer nur dann angeboten, wenn eine voraussichtlich erforderliche Ladezeit einen vorgegebenen Grenzwert, beispielsweise 30 Minuten, erreicht oder überschreitet.

D. h. es wird eine voraussichtlich erforderliche Ladezeit prognostiziert. Wird prognostiziert, dass voraussichtlich eine Ladezeit erforderlich ist, die den vorgegebenen Grenzwert von beispielsweise 30 Minuten erreicht oder überschreitet, so wird die mindestens eine Komfortfunktion dem mindestens einen Fahrzeugnutzer nach dem Start des elektrischen Ladevorgangs, insbesondere unmittelbar nach dem Start des elektrischen Ladevorgangs und dem Prognostizieren der voraussichtlich erforderlichen Ladezeit, angeboten. Dadurch wird sichergestellt, dass die aufgrund des Ladevorgangs zur Verfügung stehende Zeit, in welcher das Fahrzeug stillsteht und somit nicht zur Fortbewegung genutzt werden kann, für die angebotene Komfortfunktion ausreichend ist, so dass diese Komfortfunktion nicht frühzeitig abgebrochen werden muss.

Vorteilhafterweise wird der Fahrzeugnutzer über die für die mindestens eine angebotene Komfortfunktion (KF) zusätzlich benötigte Energie und die damit verbundene Verlängerung der voraussichtlich erforderlichen Ladezeit (ELZ) informiert. Damit kann er selber abschätzen, wie sehr der Ladevorgang und damit die Zeit, die er an der Ladestation verbringen wird, sich durch das Komfortangebot verlängert und damit selbst eine Priorisierung vornehmen.

Beispielsweise wird die mindestens eine Komfortfunktion dem mindestens einen Fahrzeugnutzer nur dann angeboten, wenn festgestellt wird, dass keine Vorhabenplanung des mindestens einen Fahrzeugnutzers innerhalb der voraussichtlichen Ladezeit vorliegt. Dies wird beispielsweise durch einen Zugriff auf einen elektronischen Terminkalender des mindestens einen Fahrzeugnutzers, beispielsweise durch Zugriff auf mindestens ein mobiles Endgerät, insbesondere Mobiltelefon, des mindestens einen Fahrzeugnutzers ermittelt. Dadurch wird ein Angebot einer Aktivierung einer Komfortfunktion, welches unnötig ist, da der zumindest eine Fahrzeugnutzer bereits ein anderes Vorhaben geplant hat, vermieden. Insbesondere werden dadurch eine Irritation des zumindest einen Fahrzeugnutzers und eine mögliche Ablenkung des Fahrzeugnutzers von seinem bereits geplanten Vorhaben vermieden.

Die mindestens eine Komfortfunktion wird dem mindestens einen Fahrzeugnutzer beispielsweise optisch, insbesondere über mindestens eine Anzeigeeinheit im Fahrzeug, zur Aktivierung angeboten, zum Beispiel als eine so genannte Notification. Die Anzeigeeinheit ist beispielsweise eine Zentraleinheit des Fahrzeugs, auch als Head Unit bezeichnet, welche beispielsweise im Bereich einer Instrumententafel des Fahrzeugs angeordnet ist, oder eine Komponente einer solchen Zentraleinheit. Dadurch wird sichergestellt, dass der zumindest eine Fahrzeugnutzer das Angebot der Komfortfunktion wahrnimmt. Alternativ oder zusätzlich kann die mindestens eine Komfortfunktion dem mindestens einen Fahrzeugnutzer beispielsweise akustisch, insbesondere durch eine Sprachausgabe, und/oder haptisch und/oder auf andere Weise optisch zur Aktivierung angeboten werden.

Die mindestens eine angebotene Komfortfunktion wird beispielsweise über mindestens eine Eingabeeinheit des Fahrzeugs oder durch eine Spracheingabe des mindestens einen Fahrzeugnutzers aktiviert. Die mindestens eine Eingabeeinheit kann beispielsweise die hierfür berührungssensitiv ausgebildete Anzeigeeinheit und/oder eine andere Eingabeeinheit sein. Die Aktivierung kann beispielsweise durch Antippen eines auf der berührungssensitiven Anzeigeeinheit angezeigten Aktivierungselementes, beispielsweise eines so genannten "Play Button", erfolgen oder durch Anklicken eines solchen auf der Anzeigeeinheit angezeigten Aktivierungselementes mittels eines anderen Bedienelementes. Dadurch wird ermöglicht, dass der zumindest eine Fahrzeugnutzer die angebotene zumindest eine Komfortfunktion durch eine entsprechende aktive Handlung aktivieren kann oder das Aktivieren unterlassen kann. Insbesondere wird dadurch eine automatische Aktivierung der vom zumindest einen Fahrzeugnutzer möglicherweise nicht gewünschten Komfortfunktion vermieden.

Die mindestens eine Komfortfunktion umfasst beispielsweise mindestens eine optische, akustische und/oder haptische Ausgabe, insbesondere Informationsausgabe, im Fahrzeug und/oder eine Einstellung von Umgebungsbedingungen im Fahrzeug. Die akustische Ausgabe kann beispielsweise eine Ausgabe von Musik und/oder von Sprachinformationen umfassen. Die optische Ausgabe kann beispielsweise Darstellungen auf mindestens einer Anzeigeeinheit des Fahrzeugs umfassen, beispielsweise auf der Anzeigeeinheit des Fahrzeugs, welche als Zentraleinheit ausgebildet oder eine Komponente dieser Zentraleinheit ist. Die haptische Ausgabe kann beispielsweise eine Massagefunktion umfassen, welche insbesondere über einen Fahrzeugsitz erfolgt, auf welchem der zumindest eine Fahrzeugnutzer sitzt. Die Einstellung der Umgebungsbedingungen kann beispielsweise eine Einstellung einer Beleuchtung, insbesondere einer Ambientebeleuchtung, eine Klimatisierungseinstellung, insbesondere eine Temperatur- und/oder Lüftungseinstellung, eine Öffnungseinstellung von Seitenfenstern, Dachfenstern und/oder eines Klapp- oder Faltdachs des Fahrzeugs, eine Beduftungseinstellung eines Innenraums des Fahrzeugs, eine Sitzeinstellung des Fahrzeugsitzes, auf welchem der zumindest eine Fahrzeugnutzer sitzt, und/oder eine Einstellung einer Sitzklimatisierung, insbesondere Sitzheizung und/oder Sitzlüftung, des Fahrzeugsitzes, auf welchem der zumindest eine Fahrzeugnutzer sitzt, umfassen. Dadurch kann die geistige und/oder körperliche Erholung, Vitalisierung, Entspannung und/oder Erfrischung des mindestens einen Fahrzeugnutzers optimiert werden.

In einer möglichen Ausführungsform des Verfahrens werden dem mindestens einen Fahrzeugnutzer mehrere Komfortfunktionen zur Aktivierung angeboten. Dadurch kann der mindestens eine Fahrzeugnutzer eine oder mehrere der angebotenen Komfortfunktionen entsprechend seinen Wünschen und Bedürfnissen auswählen und aktivieren, wodurch die geistige und/oder körperliche Erholung, Vitalisierung, Entspannung und/oder Erfrischung des mindestens einen Fahrzeugnutzers und/oder die Verbesserung seiner Gesundheit optimiert wird.

Vorteilhafterweise trifft der mindestens einen Fahrzeugnutzer vor dem Angebot einer Komfortfunktion (KF) eine Auswahl, welche Komfortgesichtspunkte er als vorrangig vorgibt. Daraufhin kann ihm eine optimierte Auswahl an Komfortfunktionen, je nach seinen Vorgaben, angeboten werden. Damit wird erreicht, dass das Verfahren eine höhere individuelle Komponente enthält und besser an die speziellen Bedürfnisse des Fahrzeugnutzers angepasst ist.

Beispielsweise wird dem mindestens einen Fahrzeugnutzer aus einer Menge verfügbarer Komfortfunktionen eine Auswahl von Komfortfunktionen zur Aktivierung angeboten. Er kann dann beispielsweise aus dieser Auswahl eine Komfortfunktion oder mehrere Komfortfunktionen aktivieren. Bei dieser Ausführungsform werden dem mindestens einen Fahrzeugnutzer somit nicht alle verfügbaren Komfortfunktionen angeboten, sondern nur diejenigen, welche beispielsweise besonders gut zur aktuellen Situation passen.

Die mindestens eine Komfortfunktion oder die Auswahl der Komfortfunktionen wird beispielsweise in Abhängigkeit von einer Tageszeit, von einer bisherigen Fahrtzeit, von einer voraussichtlich bevorstehenden Fahrtzeit, von einer voraussichtlichen Gesamtfahrtzeit, und/oder von einem Vitalzustand des mindestens einen Fahrzeugnutzers zur Aktivierung angeboten. Der Vitalzustand umfasst beispielsweise ein Stressniveau, eine Müdigkeit, eine Dauer und/oder Intensität mindestens einer zurückliegenden Schlafphase, ein Aufmerksamkeitsniveau, einen Gesundheitszustand und/oder mindestens einen Vitalparameter. Dadurch werden dem mindestens einen Fahrzeugnutzer Komfortfunktionen zur Aktivierung angeboten, welche besonders gut zur auf diese Weise charakterisierten aktuellen Situation passen und daher besonders zur geistigen und/oder körperlichen Erholung, Vitalisierung, Entspannung und/oder Erfrischung des mindestens einen Fahrzeugnutzers beitragen.

Eine Ermittlung der zur Aktivierung anzubietenden mindestens einen Komfortfunktion oder der Auswahl zur Aktivierung anzubietender Komfortfunktionen wird beispielsweise im Fahrzeug oder fahrzeugextern, insbesondere in einer zentralen Verarbeitungseinrichtung beispielsweise eines Herstellers des Fahrzeugs, auch als Vehicle Backend bezeichnet, durchgeführt. Bei der fahrzeugexternen Variante können besonders große Datenbanken und Verarbeitungskapazitäten außerhalb des Fahrzeugs bereitgehalten werden, so dass das Fahrzeug und dessen Komponenten hiervon entlastet werden. Bei der fahrzeuginternen Variante kann dies ohne eine Kommunikationsverbindung zu fahrzeugexternen Einheiten und somit autark durchgeführt werden.

Als Komfortfunktion werden/wird dem mindestens einen Fahrzeugnutzer beispielsweise ein Kurzschlafprogramm, d. h. eine Unterstützung zur Durchführung eines Kurzschlafs, auch als Power Nap bezeichnet, ein Ernährungstrainingsprogramm, ein Sporttrainingsprogramm, ein Muskelaktivierungsprogramm, ein Muskelentspannungsprogramm, ein Balanceprogramm, ein Mentalfitnesstrainingsprogramm, ein Wärmeprogramm, ein Vitalitätsprogramm, ein Freudeprogramm, ein Ratgeberprogramm, ein Massageprogramm, ein Unterhaltungsprogramm und/oder ein Spaziergangsprogramm zur Aktivierung angeboten. Das Spaziergangsprogramm wird beispielsweise zur Aktivierung angeboten, falls sich in der Nähe des Fahrzeugs eine schöne Umgebung und/oder ein interessantes Ausflugsziel, auch als Point of Interest (POI) bezeichnet, befindet. Das Spaziergangsprogramm beinhaltet dann beispielsweise eine Empfehlung, diese Umgebung und/oder dieses Ausflugsziel zu besuchen, d. h. insbesondere eine Empfehlung eines Spaziergangs dorthin, und beispielsweise eine entsprechende Routenbeschreibung, wobei vorteilhafterweise eine Dauer dieses Spaziergangs, insbesondere über die entsprechende Routenbeschreibung, an eine Dauer der voraussichtlich erforderlichen Ladezeit angepasst wird.

Ausführungsbeispiele der Erfindung werden im Folgenden anhand einer Zeichnung näher erläutert.

Dabei zeigt:

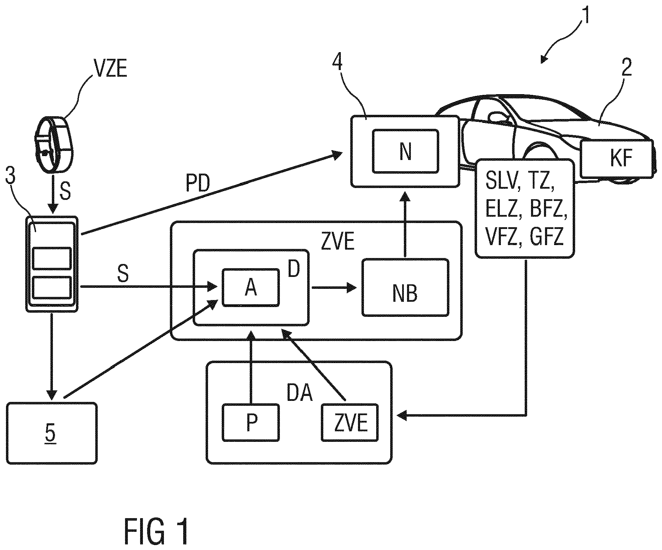

- Fig. 1: schematisch ein Verfahren zum Betrieb eines Fahrzeugs.

Figur 1 zeigt eine schematische Darstellung eines Verfahrens zum Betrieb eines Fahrzeugs 2, insbesondere eine Architektur 1, d. h. insbesondere Einrichtung, zur Durchführung des Verfahrens.

Das Fahrzeug 2 ist insbesondere als ein Elektrofahrzeug, Hybridfahrzeug oder Brennstoffzellenfahrzeug ausgebildet. Es weist mindestens einen in einem elektrischen Ladevorgang mittels einer externen Energiequelle, d. h. einer beispielsweise öffentlich zugänglichen oder privaten Ladestation, aufladbaren Energiespeicher auf, welcher insbesondere als ein elektrochemischer Energiespeicher ausgebildet ist. Dieser mindestens eine Energiespeicher dient insbesondere einer elektrischen Energieversorgung mindestens eines elektrischen Antriebsmotors zur Durchführung eines elektrischen Fahrbetriebs des Fahrzeugs 2. Ein solcher Energiespeicher wird auch als Traktionsbatterie bezeichnet.

Derartige Fahrzeuge 2, genauer gesagt deren Energiespeicher, müssen somit immer wieder geladen werden, wobei hierfür längere Ladezeiten anfallen. So dauert beispielsweise bereits ein schnelles Laden oder ein nicht vollständiges, beispielsweise bedarfsorientiertes, Laden mindestens 30 Minuten. Diese Zeit kann von einem Fahrzeugnutzer auf sinnvolle Weise genutzt werden, insbesondere zur geistigen und/oder körperlichen Erholung, Vitalisierung, Entspannung und/oder Erfrischung des mindestens einen Fahrzeugnutzers, insbesondere für einen nachfolgenden Fahrtabschnitt, und/oder zur Verbesserung seiner Gesundheit.

Daher wird im hier beschriebenen Verfahren zum Betrieb des Fahrzeugs 2 dem mindestens einen Fahrzeugnutzer des Fahrzeugs 2, insbesondere einem Fahrzeugführer und/oder einem anderen Fahrzeuginsassen des Fahrzeugs 2, nach einem Start SLV des elektrischen Ladevorgangs des mindestens einen Energiespeichers des Fahrzeugs 2 mindestens eine Komfortfunktion KF zur Aktivierung angeboten. Hierzu wird der Start SLV des elektrischen Ladevorgangs erkannt, beispielsweise in einer Zentraleinheit 4 des Fahrzeugs 2, auch als Head Unit bezeichnet, und vorteilhafterweise in ein entsprechendes Angebot an den mindestens einen Fahrzeugnutzer umgewandelt.

Es wird dann beispielsweise auf einer Anzeigeeinheit der Zentraleinheit 4 die mindestens eine Komfortfunktion KF zur Aktivierung angezeigt, beispielsweise in Form einer so genannten Notification, d. h. einer kurzen Mitteilung, wobei beispielsweise ein Aktivierungselement, zum Beispiel ein so genannter "Play Button", angezeigt wird, mittels welchem die Komfortfunktion KF aktivierbar ist. Hierzu ist die Anzeigeeinheit beispielsweise berührungssensitiv ausgebildet, so dass sie auch als Eingabeeinheit dient. Alternativ oder zusätzlich besteht beispielsweise die Möglichkeit einer Aktivierung durch eine Spracheingabe des mindestens einen Fahrzeugnutzers.

Als Komfortfunktion KF werden/wird dem mindestens einen Fahrzeugnutzer beispielsweise ein Kurzschlafprogramm, d. h. eine Unterstützung zur Durchführung eines Kurzschlafs, auch als Power Nap bezeichnet, ein Ernährungstrainingsprogramm, ein Sporttrainingsprogramm, ein Muskelaktivierungsprogramm, ein Muskelentspannungsprogramm, ein Balanceprogramm, ein Mentalfitnesstrainingsprogramm, ein Wärmeprogramm, ein Vitalitätsprogramm, ein Freudeprogramm, ein Ratgeberprogramm, ein Massageprogramm, ein Unterhaltungsprogramm und/oder ein Spaziergangsprogramm zur Aktivierung angeboten.

Das Spaziergangsprogramm wird beispielsweise zur Aktivierung angeboten, falls sich in der Nähe des Fahrzeugs 2 eine schöne Umgebung und/oder ein interessantes Ausflugsziel, auch als Point of Interest (POI) bezeichnet, befindet. Das Spaziergangsprogramm beinhaltet dann beispielsweise eine Empfehlung, diese Umgebung und/oder dieses Ausflugsziel zu besuchen, d. h. insbesondere eine Empfehlung eines Spaziergangs dorthin, und beispielsweise eine entsprechende Routenbeschreibung, wobei vorteilhafterweise eine Dauer dieses Spaziergangs, insbesondere über die entsprechende Routenbeschreibung, an eine Dauer der voraussichtlich erforderlichen Ladezeit ELZ angepasst wird.

Beispielsweise wird die mindestens eine Komfortfunktion KF dem mindestens einen Fahrzeugnutzer nur dann angeboten, wenn die voraussichtlich erforderliche Ladezeit ELZ einen vorgegebenen Grenzwert, beispielsweise 30 Minuten, erreicht oder überschreitet. D. h. es wird eine voraussichtlich erforderliche Ladezeit ELZ prognostiziert. Wird prognostiziert, dass voraussichtlich eine Ladezeit ELZ erforderlich ist, die den vorgegebenen Grenzwert von beispielsweise 30 Minuten erreicht oder überschreitet, so wird die mindestens eine Komfortfunktion KF dem mindestens einen Fahrzeugnutzer nach dem Start SLV des elektrischen Ladevorgangs, insbesondere unmittelbar nach dem Start SLV des elektrischen Ladevorgangs und dem Prognostizieren der voraussichtlich erforderlichen Ladezeit ELZ, angeboten.

In einer möglichen Ausführungsform des Verfahrens wird dem mindestens einen Fahrzeugnutzer aus einer Menge verfügbarer Komfortfunktionen KF eine Auswahl von Komfortfunktionen KF zur Aktivierung angeboten. Er kann dann beispielsweise aus dieser Auswahl eine Komfortfunktion KF oder mehrere Komfortfunktionen KF aktivieren.

Die mindestens eine Komfortfunktion KF oder die Auswahl der Komfortfunktionen KF wird beispielsweise in Abhängigkeit von einer aktuell vorliegenden Tageszeit TZ, von einer bisherigen Fahrtzeit BFZ, von einer voraussichtlich bevorstehenden Fahrtzeit VFZ, von einer voraussichtlichen Gesamtfahrtzeit GFZ und/oder von einem Vitalzustand des mindestens einen Fahrzeugnutzers zur Aktivierung angeboten. Der Vitalzustand umfasst beispielsweise ein Stressniveau, eine Müdigkeit, eine Dauer und/oder Intensität mindestens einer zurückliegenden Schlafphase, ein Aufmerksamkeitsniveau, einen Gesundheitszustand und/oder mindestens einen Vitalparameter.

Eine Ermittlung der zur Aktivierung anzubietenden mindestens einen Komfortfunktion KF oder der Auswahl zur Aktivierung anzubietender Komfortfunktionen KF wird beispielsweise im Fahrzeug 2 oder fahrzeugextern, insbesondere in einer zentralen Verarbeitungseinrichtung ZVE eines Herstellers des Fahrzeugs 2, auch als Vehicle Backend bezeichnet, durchgeführt.

Im Verfahren wird somit, wenn die voraussichtlich erforderliche Ladezeit ELZ den vorgegebenen Grenzwert, beispielsweise 30 Minuten, erreicht oder überschreitet und der mindestens eine Fahrzeugnutzer beispielsweise aufgrund einer bisherigen Fahrtzeit BFZ und einer aktuellen Tageszeit TZ müde sein könnte, beispielsweise das Kurzschlafprogramm zur Aktivierung angeboten, d. h. es wird dem mindestens einen Fahrzeugnutzer ein Kurzschlaf, auch als Power Nap bezeichnet, empfohlen, und dieser wird durch das Kurzschlafprogramm unterstützt.

Falls beispielsweise aufgrund einer bisherigen Fahrtzeit BFZ und einer aktuellen Tageszeit TZ das Ernährungstrainingsprogramm vom Fahrzeugnutzer gewünscht sein könnte, wird entsprechend dieses Ernährungstrainingsprogramm zur Aktivierung angeboten. Alternativ oder zusätzlich können eines oder mehrere der oben genannten anderen Programme zur Aktivierung angeboten werden.

Figur 1 zeigt den Ablauf eines Ausführungsbeispiels dieses Verfahrens anhand der Architektur 1 zu dessen Durchführung.

Das Fahrzeug 2 weist mindestens eine Komfortfunktion KF oder vorteilhafterweise mehrere Komfortfunktionen KF auf, welche ausgeführt werden können. Es erfasst den Start SLV des elektrischen Ladevorgangs und meldet diesen an eine Diensteaktivierung DA.

Der Fahrzeugnutzer kann auf ein Portal P, insbesondere ein Webportal, d. h. ein Internetportal, einer zentralen Verarbeitungseinrichtung ZVE des Fahrzeugherstellers zugreifen und einen entsprechenden Dienst D zur Durchführung dieses Verfahrens aktivieren. Dieser Dienst D wird dann von der zentralen Verarbeitungseinrichtung ZVE aktiviert, beispielsweise pro Fahrt oder bis zu einem Widerruf durch den Fahrzeugnutzer.

Der Dienst D zur Durchführung des Verfahrens greift auf einen Server 5, auch als Backend bezeichnet, einer Vitalzustandsfassungseinrichtung VZE zu, um einen Vitalzustand des Fahrzeugnutzers zu erfassen. Die Vitalzustandserfassungseinheit VZE ist beispielsweise ein entsprechendes Sensorarmband, um entsprechende Sensordaten, beispielsweise Pulsdaten PD und/oder Bewegungsdaten, zur Ermittlung des Vitalzustands des Fahrzeugnutzers zu erfassen. Dadurch kann beispielsweise auch ein Schlafverhalten des Fahrzeugnutzers vor Fahrtantritt berücksichtigt werden.

Diese Sensordaten werden beispielsweise über das mobile Endgerät 3, insbesondere ein Mobiltelefon, des Fahrzeugnutzers an den Server 5 der Vitalzustandserfassungseinrichtung VZE übertragen. Die Pulsdaten PD können beispielsweise, alternativ oder zusätzlich, auch mittels dieses mobilen Endgeräts 3 direkt an die Zentraleinheit 4 des Fahrzeugs 2 übertragen werden, zum Beispiel zur Ermittlung eines Vitalzustands während der Fahrt. Ein entsprechendes Signal S zur Ermittlung des Vitalzustands kann beispielsweise von der Vitalzustandsfassungseinrichtung VZE an das mobile Endgerät 3 und von diesem, insbesondere über ein darauf installiertes Programm, an die zentrale Verarbeitungseinrichtung ZVE des Fahrzeugherstellers erfolgen.

Der Dienst D zur Durchführung des Verfahrens ermittelt nun bei Vorliegen der oben genannten Voraussetzungen und insbesondere in Abhängigkeit von der Tageszeit TZ, von der bisherigen Fahrtzeit BFZ, von der voraussichtlich bevorstehenden Fahrtzeit VFZ, von der voraussichtlichen Gesamtfahrtzeit GFZ, beispielsweise ermittelt durch das Fahrzeug 2, bei den voraussichtlichen Fahrtzeiten VFZ, GFZ beispielsweise durch ein Navigationssystem des Fahrzeugs 2, und/oder vom Vitalzustand des Fahrzeugnutzers mittels eines entsprechenden Algorithmus A die dem Fahrzeugnutzer zur Aktivierung anzubietenden Komfortfunktionen KF und veranlasst über einen Notifikationsbereich NB in der zentralen Verarbeitungseinrichtung ZVE eine entsprechende Anzeige, d. h. eine Notifikation N über die zur Aktivierung angebotenen Komfortfunktionen KF, auf der Anzeigeeinheit der Zentraleinheit 4 des Fahrzeugs 2. Die Tageszeit TZ, die bisherige Fahrtzeit BFZ, die voraussichtlich bevorstehende Fahrtzeit VFZ und/oder die voraussichtliche Gesamtfahrtzeit GFZ werden dabei beispielsweise durch das Fahrzeug 2 ermittelt, bei den voraussichtlichen Fahrtzeiten VFZ, GFZ beispielsweise durch ein Navigationssystem des Fahrzeugs 2.

Zur Verfeinerung des Verfahrens gehen in die Auswahl der Komfortfunktion KF, die dem Fahrzeugnutzer, wie oben beschrieben, während der Ladephase angeboten werden, Faktoren zur Energieeffizienz ein.

Einerseits wird der Fahrzeugnutzer zu Beginn der Ladephase informiert, wie lange die Ladephase dauert, er wird also über die voraussichtlich erforderliche Ladezeit ELZ zunächst informiert. Darüber hinaus erfolgt das Angebot von Komfortfunktionen KF abhängig von dieser Dauer. Beispielsweise werden ihm nur die Komfortfunktionen KF angeboten, die auch innerhalb dieser Ladezeit ELZ durchgeführt bzw. abgeschlossen werden können.

Alternativ oder zusätzlich werden dem Fahrzeugnutzer zu angebotenen Komfortfunktionen KF Informationen darüber angezeigt, wieviel Zeit die Durchführung dieser Komfortfunktion KF in Anspruch nehmen wird und um wie viel sich die voraussichtlich erforderliche Ladezeit ELZ verlängern wird. Es kann auch die zur Durchführung der Komfortfunktion KF voraussichtlich aufzuwendende zusätzliche Energie angezeigt werden. Mit Hilfe dieser Zusatzinformationen ist der Fahrzeugnutzer in der Lage, selbst zu entscheiden, ob ihm die Durchführung dieser Funktion ist, ob es ihm wert ist, dass sich dadurch die Ladezeit des Fahrzeugs 2 um eine bestimmte Dauer verlängert. Der Fahrzeugnutzer kann dann eine eigene Priorisierung durchführen.

Ergänzend werden dem Fahrzeugnutzer weitere, für ihn zu diesem Zeitpunkt noch passendere Vorschläge zu Komfortangeboten gemacht und zur Auswahl gestellt und um die Information ergänzt, um wie viel länger als für die Ladephase unbedingt notwendig das Durchführen der Komfortfunktion KF dauern würde.

Weiterhin kann zusätzlich die Information an den Fahrzeugnutzer erfolgen, welche positiven Folgen die Annahme des Angebots bzw. die Durchführung der Komfortfunktion KF für ihn, für die Umwelt (z.B. später ist die Verkehrssituation besser...) und für das Fahrzeug hat. Beispielsweise könnte sich die Verkehrssituation zu einem späteren Zeitpunkt verbessern, die Klimatisierung des Innenraums könnte durch eine längere Verweildauer optimiert werden oder die Batterie könnte vollständiger konditioniert werden.

In einer weiteren Ausführungsform des Verfahrens wird dem Fahrzeugnutzer vor dem Angebot einer Komfortfunktion, also vorab ein Auswahlmenü angeboten, welche Komfortgesichtspunkte ihm zu diesem Zeitpunkt wichtig sind. Er könnte beispielsweise entscheiden, ob er eher Aktivierung, Schlaf, Entspannung, Essen, Bewegen außerhalb des Fahrzeugs, Nachhaltigkeit, Energieeffizienz, Konditionieren des Fahrzeugs etc. als wichtige Gesichtspunkte sieht. Dementsprechend könnte dieser Gesichtspunkt als ein Kriterium in die Auswahl der Komfortfunktion KF, die dem Fahrzeugnutzer angeboten sind, eingehen. Damit wird ein hohes Maß an Anpassung des Verfahrens auf die individuellen Bedürfnisse des Fahrzeugnutzers zu diesem speziellen Zeitpunkt erreicht.

## Patentansprüche

1. Verfahren zum Betrieb eines Fahrzeugs (2), wobei mindestens einem Fahrzeugnutzer mindestens eine Komfortfunktion (KF) zur Aktivierung angeboten wird, wobei die mindestens eine Komfortfunktion (KF) dem mindestens einen Fahrzeugnutzer nach einem Start (SLV) eines elektrischen Ladevorgangs mindestens eines Energiespeichers des Fahrzeugs (2) zur Aktivierung angeboten wird,
**dadurch gekennzeichnet, dass** die mindestens eine Komfortfunktion dem Fahrzeugnutzer in Abhängigkeit von einer voraussichtlich erforderlichen Ladezeit (ELZ) angeboten wird.

2. Verfahren nach Anspruch 1,
**dadurch gekennzeichnet, dass** die mindestens eine Komfortfunktion (KF) dem mindestens einen Fahrzeugnutzer nur dann angeboten wird, wenn die voraussichtlich erforderliche Ladezeit (ELZ) einen vorgegebenen Grenzwert erreicht oder überschreitet.

3. Verfahren nach Anspruch 1,
**dadurch gekennzeichnet, dass** der Fahrzeugnutzer über die für die mindestens eine angebotene Komfortfunktion (KF) zusätzlich benötigte Energie und die damit verbundene Verlängerung der voraussichtlich erforderlichen Ladezeit (ELZ) informiert wird.

4. Verfahren nach einem der vorhergehenden Ansprüche,
**dadurch gekennzeichnet, dass** die mindestens eine angebotene Komfortfunktion (KF) über mindestens eine Eingabeeinheit des Fahrzeugs (2) oder durch eine Spracheingabe aktiviert wird.

5. Verfahren nach einem der vorhergehenden Ansprüche,
**dadurch gekennzeichnet, dass** die mindestens eine Komfortfunktion (KF) mindestens eine optische, akustische und/oder haptische Ausgabe im Fahrzeug (2) und/oder eine Einstellung von Umgebungsbedingungen im Fahrzeug (2) umfasst.

6. Verfahren nach einem der vorhergehenden Ansprüche,
**dadurch gekennzeichnet, dass** dem mindestens einen Fahrzeugnutzer mehrere Komfortfunktionen (KF) zur Aktivierung angeboten werden.

7. Verfahren nach einem der vorhergehenden Ansprüche,
**dadurch gekennzeichnet, dass** der mindestens einen Fahrzeugnutzer vor dem Angebot einer Komfortfunktion (KF) eine Auswahl trifft, welche Komfortgesichtspunkte er als vorrangig vorgibt.

8. Verfahren nach einem der vorhergehenden Ansprüche,
**dadurch gekennzeichnet, dass** die mindestens eine Komfortfunktion (KF) oder die Auswahl der Komfortfunktionen (KF) zusätzlich zur Abhängigkeit von einer voraussichtlich erforderlichen Ladezeit in Abhängigkeit von einer Tageszeit (TZ), von einer bisherigen Fahrtzeit (BFZ), von einer voraussichtlich bevorstehenden Fahrtzeit (VFZ), von einer voraussichtlichen Gesamtfahrtzeit (GFZ) und/oder von einem Vitalzustand des mindestens einen Fahrzeugnutzers zur Aktivierung angeboten wird.

9. Verfahren nach einem der vorhergehenden Ansprüche,
**dadurch gekennzeichnet, dass** eine Ermittlung der zur Aktivierung anzubietenden mindestens einen Komfortfunktion (KF) oder der Auswahl zur Aktivierung anzubietender Komfortfunktionen (KF) im Fahrzeug (2) oder fahrzeugextern, insbesondere in einer zentralen Verarbeitungseinrichtung (ZVE) eines Herstellers des Fahrzeugs (2), durchgeführt wird.

10. Verfahren nach einem der vorhergehenden Ansprüche,
**dadurch gekennzeichnet, dass** dem mindestens einen Fahrzeugnutzer als Komfortfunktion (KF) ein Kurzschlafprogramm, ein Ernährungstrainingsprogramm, ein Sporttrainingsprogramm, ein Muskelaktivierungsprogramm, ein Muskelentspannungsprogramm, ein Balanceprogramm, ein Mentalfitnesstrainingsprogramm, ein Wärmeprogramm, ein Vitalitätsprogramm, ein Freudeprogramm, ein Ratgeberprogramm, ein Massageprogramm, ein Unterhaltungsprogramm und/oder ein Spaziergangsprogramm zur Aktivierung angeboten werden/wird.

## Claims

1. Method for operating a vehicle (2), wherein at least one comfort function (KF) is offered to at least one vehicle user for activation, wherein the at least one comfort function (KF) is offered to the at least one vehicle user after a start (SLV) of an electric charging process of at least one energy storage unit of the vehicle (2) for activation,
**characterised in that** the at least one comfort function is offered to the vehicle user as a function of a presumably required charging time (ELZ).

2. Method according to claim 1,
**characterised in that** the at least one comfort function (KF) is offered to the at least one vehicle user only if the presumably required charging time (ELZ) reaches or exceeds a predetermined limit value.

3. Method according to claim 1,
**characterised in that** the vehicle user is informed about the additional energy required for the at least one comfort function (KF) offered and the extension of the presumably required charging time (ELZ) associated therewith.

4. Method according to any of the preceding claims,
**characterised in that** the at least one comfort function (KF) offered is activated via at least one input unit of the vehicle (2) or by voice input.

5. Method according to any of the preceding claims,
**characterised in that** the at least one comfort function (KF) comprises at least one visual, audible and/or haptic output in the vehicle (2) and/or an adjustment of environmental conditions in the vehicle (2).

6. Method according to any of the preceding claims,
**characterised in that** several comfort functions (KF) are offered to the at least one vehicle user for activation.

7. Method according to any of the preceding claims,
**characterised in that** the at least one vehicle user selects, before the offer of a comfort function (KF), which comfort aspects should be preset as being preferential.

8. Method according to any of the preceding claims,
**characterised in that** the at least one comfort function (KF) or the selection of the comfort function (KF) is offered for activation, in addition to as a function of a presumably required charging time (ELZ), as a function of a time of day (TZ), of a travelling time up to now (BFZ), of a presumably forthcoming travelling time (VFZ), of a likely total travelling time (GFZ) and/or of a state of vitality of the at least one vehicle user.

9. Method according to any of the preceding claims,
**characterised in that** a determination of the comfort function (KF) to be offered for activation or of the selection of comfort functions (KF) to be offered for activation is carried out in the vehicle (2) or outside the vehicle, in particular in a central processing unit (ZVE) of a manufacturer of the vehicle (2).

10. Method according to any of the preceding claims,
**characterised in that** the at least one vehicle user is offered as a comfort functions (KF) a napping programme, a nutrition training programme, a sports training programme, a muscle activation programme, a muscle relaxation programme, a balance programme, a mental fitness training programme, a warmth programme, a vitality programme, a pleasure programme, a counsellor programme, a massage programme, an entertainment programme and/or a walking programme.

## Revendications

1. Procédé de fonctionnement d'un véhicule automobile (2), dans lequel au moins une fonction de confort (KF) est proposée à au moins un utilisateur du véhicule automobile pour qu'il l'active, l'au moins une fonction de confort (KF) étant proposée à l'au moins un utilisateur du véhicule automobile pour qu'il active après un démarrage (SLV) d'un processus de charge électrique d'au moins un accumulateur d'énergie du véhicule automobile (2),
**caractérisé en ce que** l'au moins une fonction de confort est proposée à l'utilisateur du véhicule automobile en fonction d'un temps de charge nécessaire (ELZ) prévu.

2. Procédé selon la revendication 1,
**caractérisé en ce que** l'au moins une fonction de confort (KF) est seulement proposée à l'au moins un utilisateur du véhicule automobile, lorsque le temps de charge (ELZ) nécessaire prévu atteint ou dépasse une valeur limite prédéfinie.

3. Procédé selon la revendication 1, **caractérisé en ce que** l'utilisateur du véhicule automobile est informé d'une énergie supplémentaire nécessaire pour l'au moins une fonction de confort proposée (KF) et l'allongement liée à celle-ci du temps de charge nécessaire prévu (ELZ).

4. Procédé selon l'une quelconque des revendications précédentes, **caractérisé en ce que** l'au moins une fonction de confort (KF) proposée est activée par au moins une unité d'entrée du véhicule automobile (2) ou par une commande vocale.

5. Procédé selon l'une quelconque des revendications précédentes, **caractérisé en ce que** l'au moins une fonction de confort (KF) comprend au moins une sortie optique, acoustique et/ou haptique dans le véhicule automobile (2) et/ou un réglage des conditions environnementales dans le véhicule automobile (2).

6. Procédé selon l'une quelconque des revendications précédentes, **caractérisé en ce que** plusieurs fonctions de confort (KF) sont proposées à l'au moins un utilisateur du véhicule automobile pour qu'il les active.

7. Procédé selon l'une quelconque des revendications précédentes, **caractérisé en ce que** l'au moins un utilisateur du véhicule automobile effectue un choix avant la proposition d'une fonction de confort (KF) dont il considère les points de confort comme prioritaires.

8. Procédé selon l'une quelconque des revendications précédentes, **caractérisé en ce que** l'au moins une fonction de confort (KF) ou la sélection des fonctions de confort (KF) peut être proposée en outre en fonction d'un temps de charge prévus en fonction d'un jour (TZ), d'un temps de conduite jusqu'à présent (BFZ), d'un temps de route prochain prévu (VFZ), d'un temps de route total prévu (GFZ) et/ou d'un état vital de l'au moins un utilisateur du véhicule automobile pour que ce dernier les active.

9. Procédé selon l'une quelconque des revendications précédentes, **caractérisé en ce que** la détermination de l'au moins une fonction de confort (KF) à proposer pour être activée ou la sélection des fonctions de confort (KF) à proposer pour être activées s'effectue dans le véhicule (2) ou l'extérieur du véhicule, en particulier dans un dispositif de traitement central (ZVE) d'un fabricant du véhicule automobile (2).

10. Procédé selon l'une quelconque des revendications précédentes, **caractérisé en ce qu'**un programme de sieste, un programme de formation de nutrition, un programme d'entraînement sportif, un programme d'activation musculaire, un programme de détente musculaire, un programme d'équilibre, un programme d'entraînement de fitness mental, un programme d'échauffement, un programme de vitalité, un programme de joie, un programme de conseil, un programme de massage, un programme de divertissement et/ou un programme de promenade est/sont proposé(s) à l'au moins un utilisateur du véhicule automobile pour qu'il le/les active.
